# EUROPEAN PATENT APPLICATION

(11) **EP 4 692 891 A1**
(43) Date of publication of application: **11.02.2026**
(21) Application number: 24780856.1
(22) Date of filing: 29.03.2024
(51) Int. Cl.: G02B 21/06, G01N 21/64, G02B 21/36

(54) **MICROSCOPE AND MICROSCOPE CONTROL METHOD**

(30) Priority: 31.03.2023 JP 2023058360
(71) Applicant: NIKON CORPORATION, Tokyo 140-8601 (JP)
(72) Inventor: SASAKI, Yutaka, Tokyo 108-6290 (JP); MURAYAMA, Toru, Tokyo 108-6290 (JP)
(74) Representative: Hoffmann Eitle
(86) International application number: PCT/JP2024/013157
(87) International publication number: WO 2024/204761

(57) **Abstract**

There is provided a microscope including: a light source which is able to be directly controlled between an ON state in which coherent light is emitted and an OFF state in which the light is not emitted; an illumination optical system which radiates the light to form an illumination region on a sample; an optical path change member which changes an optical path of the light; and a control unit which controls the light source and the optical path change member, in which the control unit controls the optical path change member, and performs a control to switch between a first state and a second state and sets the light source to be in the ON state in the second state, the first state being a state in which the light forms the illumination region on the sample when the light source is in the ON state, and does not form the illumination region when the light source is in the OFF state, and the second state being a state in which the light does not form the illumination region on the sample when the light source is either in the ON state or in the OFF state.

## Description

### BACKGROUND

### 1. TECHNICAL FIELD

The present invention relates to a microscope and a method of controlling a microscope.

### 2. RELATED ART

Patent Document 1 discloses a confocal scanning microscope which scans a sample with laser light for radiation.

### Related Art Documents

### Patent Document

Patent Document 1: International Publication No. WO 2009/011441

### GENERAL DISCLOSURE

In a first aspect of the present invention, a microscope is provided. The microscope includes: a light source which is able to be directly controlled between an ON state in which coherent light is emitted and an OFF state in which the light is not emitted; an illumination optical system which radiates the light to form an illumination region on a sample; an optical path change member which changes an optical path of the light; and a control unit which controls the light source and the optical path change member, in which the control unit controls the optical path change member, and performs a control to switch between a first state and a second state and sets the light source to be in the ON state in the second state, the first state being a state in which the light forms the illumination region on the sample when the light source is in the ON state, and does not form the illumination region when the light source is in the OFF state, and the second state being a state in which the light does not form the illumination region on the sample when the light source is either in the ON state or in the OFF state.

The control unit may control the light source such that the ON state and the OFF state are repeated at predetermined timing, in the second state.

The control unit may control the light source to be in the OFF state during at least one of switching from the first state to the second state, or switching from the second state to the first state.

The illumination optical system may further have a condensing lens, and in the first state, the light may pass through the condensing lens, and in the second state, the light may be incident on a predetermined standby position without passing through the condensing lens.

The microscope may further include a holding member which holds the condensing lens, in which the standby position may be a part of the holding member.

A light blocking member may be provided in the part.

The microscope may further include: a reflective member which is provided at the standby position, and which reflects the light; and an absorbing member which absorbs at least a part of the light that is reflected from the reflective member.

The optical path change member may be a galvanometer mirror or a spatial light modulator.

The control unit may perform a control to set the light source to be in the ON state, in the second state, and switch the light to be in the first state after a standby for a predetermined time.

The predetermined time may be a time for an output value from the light source to become stable.

In a second aspect of the present invention, a method of controlling a microscope is provided. A method of controlling a microscope is a method of controlling a microscope which includes a light source which is able to be directly controlled between an ON state in which coherent light is emitted and an OFF state in which the light is not emitted; an illumination optical system which radiates the light to form an illumination region on a sample; an optical path change member which changes an optical path of the light; and a control unit which controls the light source and the optical path change member, and the method of controlling a microscope includes: controlling the optical path change member, and performing a control to switch between a first state and a second state and sets the light source to be in the ON state in the second state, the first state being a state in which the light forms the illumination region on the sample when the light source is in the ON state, and does not form the illumination region when the light source is in the OFF state, the second state being a state in which the light does not form the illumination region on the sample when the light source is either in the ON state or in the OFF state.

The summary clause does not necessarily describe all necessary features of the embodiments of the present invention. The present invention may also be a sub-combination of the features described above.

### BRIEF DESCRIPTION OF THE DRAWINGS

Fig. 1 shows a schematic configuration of a microscope 200 in the first embodiment.
Fig. 2 shows a schematic configuration of a scan head 100 in the first embodiment.
Fig. 3 shows an example of scanning by the scan head 100 in the first embodiment.
Fig. 4 shows an ON and OFF timing chart of a laser light source 101 in the first embodiment.
Fig. 5 is a flowchart showing an operation of the scan head 100 in the first embodiment.
Fig. 6 shows a schematic configuration of a scan head 110 in the second embodiment.
Fig. 7 shows a schematic configuration of a scan head 120 in the third embodiment.
Fig. 8(a) and (b) show other examples of an ON and OFF control of the laser light source 101.
Fig. 9 shows an example of a computer 2200.

### DESCRIPTION OF EXEMPLARY EMBODIMENTS

Hereinafter, the present invention will be described through embodiments of the invention. The embodiments described below are not intended to limit the invention within the scope of the claims. Not all combinations of features described in the embodiments are essential for the solution of the invention.

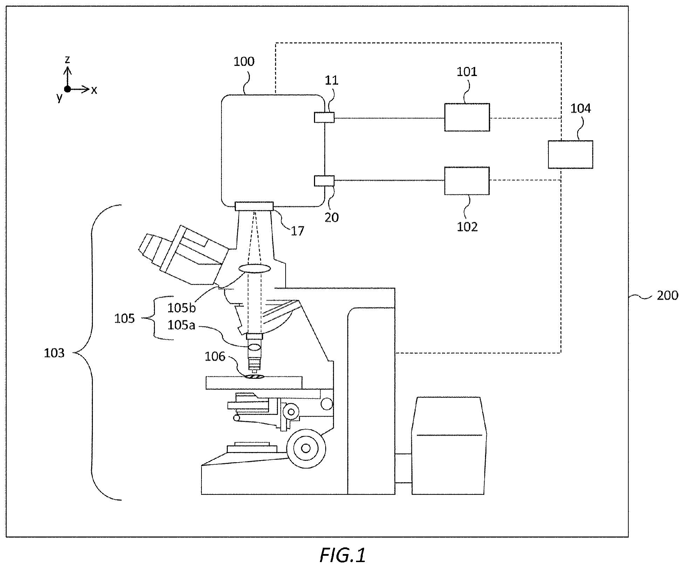

Fig. 1 shows a schematic configuration of a microscope 200 in the first embodiment. As shown in Fig. 1, the microscope 200 in the first embodiment includes a scan head 100, a laser light source 101, a light detection apparatus 102, a microscope main body 103, and a control unit 104. The microscope 200 is a microscope which scans with a laser, and may be, for example, a confocal microscope. The figure shows an xyz coordinate system.

The laser light source 101 emits, to a sample 106, laser light that is excitation light. The laser light source 101 is configured to be able to switch between an ON state (hereinafter simply referred to as ON) in which the excitation light is emitted to an outside, and an OFF state (hereinafter simply referred to as OFF) in which the excitation light is not emitted to the outside. The laser light source 101 may include, for example, a semiconductor laser, a gas laser, or a solid state laser. In other words, the control unit 104 directly controls the laser light source 101 itself to switch between ON and OFF. This is different from a system in which, in a laser light source unit including a laser light source and a mechanical shutter or an AOTF, the laser light source constantly emits the excitation light, and the mechanical shutter or the AOTF switches between ON and OFF. The sample 106 which is an observation target is arranged on a stage of the microscope main body 103. The microscope main body 103 has a first objective lens 105a and a second objective lens 105b (hereinafter collectively referred to as an objective optical system 105).

The light detection apparatus 102 receives fluorescence that is emitted from the sample 106 by a photomultiplier tube or the like, converts it into an electrical signal, and outputs it to the control unit 104. The control unit 104 accumulates input data in a computer for arranging into a single image, thereby constructing it as an observed fluorescence image, and displays the image on a display. The control unit 104 is connected to each component of the microscope 200, and is able to control each component. The control unit 104 is able to control, for example, ON and OFF of the laser light source 101, an operation of the scan head 100, or the stage of the microscope main body 103, or the like.

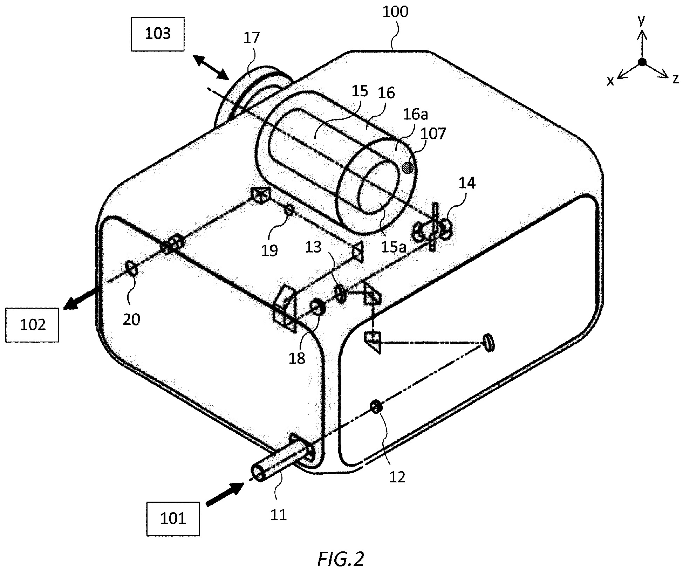

Fig. 2 shows a schematic configuration of the scan head 100 in the first embodiment. As shown in Fig. 2, the scan head 100 in the first embodiment includes an input port 11, a collimating lens 12, a dichroic mirror 13, a galvanometer mirror 14, a scanning optical system 15, a lens barrel 16, a microscope port 17, a condensing lens 18, a pinhole 19, and an output port 20. It should be noted that the scan head 100 also has another optical component such as a prism or a mirror which bends an optical path of the excitation light.

The input port 11 is a port for the excitation light that is laser light from the laser light source 101 to be incident on the scan head 100, and an optical fiber for the excitation light is connected to the input port 11. The collimating lens 12 converts, into parallel light, the excitation light input from the input port 11. The dichroic mirror 13 reflects the excitation light that has become the parallel light by the collimating lens 12.

The galvanometer mirror 14 is an example of an optical path change member which changes the optical path of the excitation light. The galvanometer mirror 14 consists of a pair of mirrors having a mirror which rotates the excitation light about an x axis, and a mirror which rotates the excitation light about a y axis. The pair of galvanometer mirrors 14 reflects, in any orthogonal two-axes direction, the excitation light reflected by the dichroic mirror 13. Accordingly, the galvanometer mirror 14 can perform scanning with the excitation light on an xy plane.

The scanning optical system 15 is a condensing lens which condenses the excitation light reflected by the galvanometer mirror 14. The scanning optical system 15 has an incident surface 15a on which the excitation light is incident. The lens barrel 16 is a holding member that holds the scanning optical system 15 which is a condensing lens. The lens barrel 16 has a side surface 16a which is parallel to the xy plane. The side surface 16a is a surface that is positioned outside the incident surface 15a. The side surface 16a of the lens barrel 16 is provided with a standby position 107 at which the excitation light from the laser light source 101 is kept on standby. In the present embodiment, the excitation light is input, via the microscope port 17, to the objective optical system 105 arranged downstream in the optical path. The scanning optical system 15 and the objective optical system 105 function as an illumination optical system which condenses the laser light to form an illumination region on the sample 106.

The excitation light incident from the incident surface 15a of the scanning optical system 15 is condensed by the scanning optical system 15; is output from the microscope port 17; and is radiated to the sample 106 via the objective optical system 105 or the like. On the other hand, the excitation light incident at a location other than the incident surface 15a of the scanning optical system 15, for example, on the side surface 16a of the lens barrel 16, is not output to the microscope port 17. Accordingly, the excitation light that is incident on the standby position 107 which is provided on the side surface 16a of the lens barrel 16 is not output from the microscope port 17, and is not radiated to the sample 106.

As described above, the excitation light emitted from the laser light source 101 passes through the input port 11, the collimating lens 12, the dichroic mirror 13, the galvanometer mirror 14, the incident surface 15a of the scanning optical system 15, the microscope port 17, and the objective optical system 105 in order; and is radiated to the sample 106. The sample 106 receives the radiated excitation light, and an excited fluorescent dye generates the fluorescence of a specific wavelength. The fluorescence that is observation light passes through the objective optical system 105 of the microscope main body 103, and is incident on the scan head 100 from the microscope port 17.

The incident fluorescence passes through the microscope port 17, the scanning optical system 15, the galvanometer mirror 14, and the dichroic mirror 13, and then is converted into converging light by the condensing lens 18. The pinhole 19 is arranged at a position conjugate with a focal position of the objective lens 105a, and blocks the light in a region other than the conjugate position. The output port 20 is a port for outputting, to the light detection apparatus 102, the fluorescence that has passed through the pinhole 19. The fluorescence generated in the sample 106 is output from the output port 20 and is input to the light detection apparatus 102.

As described above, the fluorescence emitted from the sample 106 passes through the objective optical system 105, the microscope port 17, the scanning optical system 15, the galvanometer mirror 14, the dichroic mirror 13, the condensing lens 18, the pinhole 19, and the output port 20 in order; and is finally input to the light detection apparatus 102. The light detection apparatus 102 receives fluorescence that is emitted from the sample 106 by a photomultiplier tube or the like, converts it into an electrical signal, and outputs it to the control unit 104.

The control unit 104 controls the galvanometer mirror 14 which is an optical path change member, and performs a control to switch between a first state and a second state and sets the laser light source 101 to be in the ON state in the second state, the first state being a state in which the laser light forms the illumination region on the sample 106 when the laser light source 101 is in the ON state, and does not form the illumination region when the light source is in the OFF state, and the second state being a state in which the laser light does not form the illumination region on the sample 106 when the laser light source 101 is either in the ON state or in the OFF state. Specifically, the control unit 104 controls the galvanometer mirror 14 which is an optical path change member, and performs a control to switch between a first optical path and a second optical path, the first optical path being an optical path (the optical path in the first state) in which the excitation light is output from the microscope port 17, and the second optical path being an optical path (optical path in the second state) in which the excitation light is not output from the microscope port 17. In Fig. 2, the control unit 104 performs the control to set the first optical path for the excitation light to be incident on the incident surface 15a of the scanning optical system 15. The control unit 104 performs the control to set the second optical path for the excitation light to be incident on the standby position 107 on the side surface 16a of the lens barrel 16. It should be noted that the first optical path can be said to be a collection of a plurality of optical paths, rather than a single optical path, when the scanning is performed on the sample 106 in an XY direction.

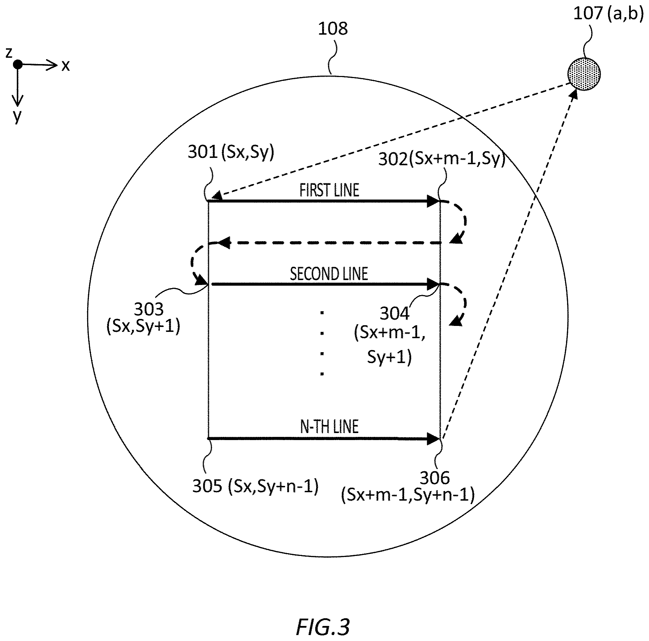

Fig. 3 shows an example of scanning with the excitation light by the scan head 100 in the first embodiment. Fig. 3 shows an observable range 108 (a maximum range in which an observation is possible) of the objective optical system 105 of the microscope 200. The observable range 108 in Fig. 3 is a range on the sample 106. The observable range 108 on the sample 106 is changed by a magnification of the objective lens 105a. The scanning of the excitation light in the present embodiment is scanning along a plurality of lines in the observable range 108 of the objective optical system 105. In Fig. 3, the plurality of lines labeled as a first line, a second line, ... n-th line are shown with thick solid lines. In Fig. 3, the scanning is performed from left to right in order along the thick solid lines representing the plurality of lines. A leftmost point of each of the plurality of lines is also referred to as a scan start position. In addition, Fig. 3 shows the standby position 107. The standby position 107 in Fig. 3 schematically shows the standby position 107 provided on the side surface 16a of the lens barrel 16 in Fig. 2. Note that optically, the side surface 16a of the lens barrel 16 corresponds to an outside of the observable range 108 of the objective optical system 105.

In the first embodiment, when a system of the microscope 200 is activated, the galvanometer mirror is first moved (rotates at a predetermined angle) such that the excitation light which is emitted from the laser light source 101 is directed toward the standby position 107 in Fig. 3. The galvanometer mirror is moved, and then the laser light source 101 is turned ON, and the excitation light is radiated to the standby position 107 to stand by until an output value of the laser light source 101 becomes stable. The excitation light that is radiated to this standby position 107 is not radiated to the sample 106.

Depending on a type of the laser light source 101, there is a case where after the laser light source 101 is turned ON, it takes several milliseconds to several seconds until the output value (an intensity of the excitation light) reaches a preset value, and then the output value actually becomes stable. For the laser light source 101 in which it takes several milliseconds until the output value becomes stable, it is not a problem to stand by for several milliseconds until the output value becomes stable. On the other hand, when the laser light source 101 in which it takes several seconds until the output value becomes stable, is used, in a case where every time an observation position of the sample 106 is changed or the sample 106 is replaced, the laser light source 101 is first completely turned OFF, and then is started again, and stands by for several seconds until the output value becomes stable for each time that happens, there is a problem that sequentiality of the observation is lost. Further, in a case where the standby is not performed, there is a problem that luminance of the image of an observation result undergoes an unexpected change, and thus a quantitative analysis or the like cannot be performed.

In contrast with this, in the present embodiment, before the excitation light is radiated to the sample 106, the excitation light is set to be in a state of being radiated to the standby position 107; and then the laser light source 101 is turned ON, and stands by until the output value from the laser light source 101 becomes stable. Accordingly, it is possible to start radiating the excitation light to the sample 106 in a state in which the output value of the laser light source 101 is stable; the problem described above is resolved; and it is possible to acquire, display and save the image that is a result of each image capture, in a state in which the luminance is stable. It should be noted that immediately after the activation of the system, the excitation light is set to be in a state of being radiated to the standby position 107; and then the laser light source 101 is turned ON, and stands by for several seconds to wait for the output value of the laser light source 101 to become stable. The need to stand by for several seconds occurs only one time immediately after the activation of the microscope 200, and then, in a case where the laser light source 101 is not turned OFF, there is no need after that for a standby time for several seconds.

At timing of starting the scanning with the excitation light, the scanning with the excitation light is performed from the standby position 107 to the scan start position, and a radiation position of the excitation light is moved. It should be noted that in Fig. 3, an upper left point 301 of the first line is the scan start position, and coordinates of the point 301 are (Sx, Sy). A lower right point 306 is a scan end position, and the coordinates of the point 306 are (Sx + m - 1, Sy + n - 1). The symbol m is an amount of a movement in an X direction (m is an integer of 1 or more), and the symbol n is an amount of a movement in a Y direction (the number of lines) (n is an integer of 1 or more). The coordinates of the standby position 107 are (a, b). The coordinates of this standby position 107 refer to a position when a projection is performed to the sample 106, as is, not via the objective optical system 105. Here, the symbols a and b are values that refer to a position outside the observable range 108 of the objective optical system 105. Here, the laser light source 101 is turned OFF for a brief time when the scanning with the excitation light is performed from the standby position 107 to the scan start position 301.

At timing when the movement of the excitation light to the scan start position 301 is completed, the laser light source 101 is turned ON again; the scanning with the excitation light is performed for one line in a +x direction, and the radiation position of the excitation light is moved to a point 302 (Sx + m - 1, Sy) on a right side of the first line; and observation data of the sample 106 is acquired. This observation data is accumulated in a memory or the like in the control unit 104.

When the radiation position of the excitation light reaches the point 302 (Sx + m - 1, Sy) on the right side of the first line, the laser light source 101 is turned OFF, and the radiation position of the excitation light is reversed to be moved to a point 303 (Sx, Sy + 1) on a left side of the second line. During the movement to the point 303 (Sx, Sy + 1), the laser light source 101 is set to be OFF. In this manner, as described above, in the reverse operation during which the data is not accumulated, unnecessary light is not set to be radiated to the sample 106, and thus it is possible to reduce phototoxicity or a damage to the sample 106. Subsequently, similarly, the scanning is performed up to the third line, fourth line, ... n-th line.

When the scan end position 306 (Sx + m - 1, Sy + n - 1) of the n-th line that is a final line is reached, the excitation light is moved from the scan end position 306 to the standby position 107. During the brief time it takes to be moved from this scan end position 306 to the standby position 107, the laser light source 101 is turned OFF; the movement of the excitation light to the standby position 107 is completed, and then the laser light source 101 is turned ON again, and is caused to stand by for a while; and the output value of the laser light source 101 is caused to be stable.

As described above, in order to suppress the phototoxicity and the damage to the sample 106, the laser light source 101 is turned OFF for a short time, while the excitation light is moved from the standby position 107 to the scan start position 301, while the excitation light is reversed from the point 302 to the point 303, or the like, and while the excitation light is moved from the scan end position 306 to the standby position 107. It should be noted that by turning OFF for a short time, a slight fluctuation may occur in the output value of the laser light source 101, but the turn OFF time is short, and thus an influence on the output value of the laser light source 101 is limited. It should be noted that in a case of using the sample 106 for which the influence of the phototoxicity or the damage is small, or the sample 106 for which there is no influence of the phototoxicity or the damage, the laser light source 101 may not be turned OFF during the periods described above. Further, the laser light source 101 may be turned OFF only for either one or two movement times in the three movement times described above.

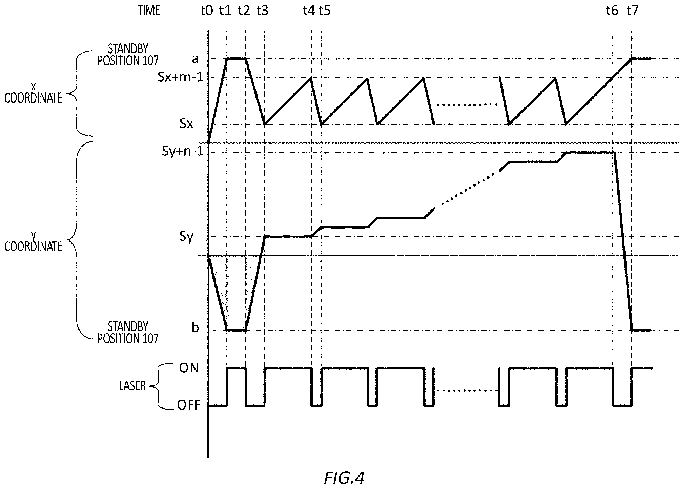

Fig. 4 shows a timing chart of an ON and OFF control of the laser light source 101 in the first embodiment. The three solid lines in Fig. 4 represent, from a top, the x coordinate and the y coordinate of the radiation position of the excitation light, and the ON and OFF control of the laser light source 101. The xy coordinates in Fig. 4 represent the xy coordinates in Fig. 3. At time t0 when the system is activated, the radiation position of the excitation light exists at an initial position (the location is undefined). Then, at time t1, the radiation position is moved to the standby position 107 (a, b). This is outside the observable range 108 of the objective optical system 105, and the excitation light is not radiated to the sample 106 even when the laser light source 101 outputs to this position. For a predetermined time from time t1 to time t2, the laser light source 101 is turned ON and stands by at the standby position 107 until the output value of the laser light source 101 becomes stable.

At time t2, after the laser light source 101 is turned OFF, the radiation position of the excitation light is moved to the scan start position that is the point 301 (Sx, Sy). Then, at time t3, the laser light source 101 is turned ON and the scanning is started. After the laser light source 101 is turned ON, the scanning is performed for the radiation position of the excitation light to the point 302 (Sx + m - 1, Sy) on the right side of the first line. During this time, the y coordinate (Sy) of the radiation position of the excitation light is maintained. Then, at time t4, the laser light source 101 is turned OFF, the radiation position of the excitation light is reversed to be moved to the start point 303 of the second line; and the laser light source 101 is turned ON again; and the scanning is executed for the second line. Then, the scanning is continued until the scanning for the n-th line is completed.

Then, at time t6, at timing when the radiation position of the excitation light reaches the scan end position that is the point 306 (Sx + m - 1, Sy + n - 1), the laser light source 101 is turned OFF and the radiation position is moved to the standby position 107 (a, b). After the movement is completed, at time t7, the laser is turned ON and is caused to stand by, and stands by for a command for the next scan.

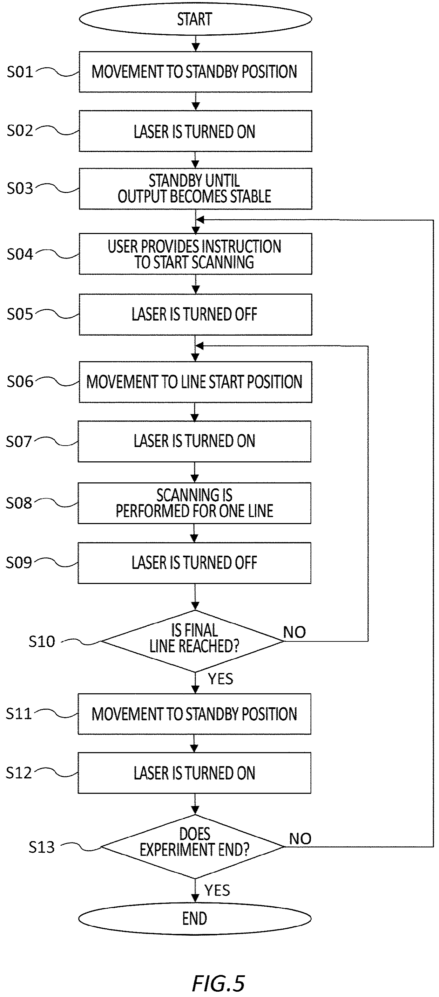

Fig. 5 is a flowchart showing an operation of the scan head 100 in the first embodiment. In step S01, after the system is started, the control unit moves the radiation position of the excitation light to the standby position 107 by scanning the galvanometer mirror 14. After the movement to the standby position 107, in the next step S02, the laser light source 101 is turned ON; and in the next step S03, stands by for a few seconds only one time immediately after the microscope 200 is activated until the output value of the laser light source 101 becomes stable.

In the next step S04, when the user provides an instruction to start the scanning, the laser light source 101 is first turned OFF in the next step S05; and in the next step S06, the radiation position of the excitation light is moved to the scan start position (first, to the scan start position 301 (Sx, Sy) of the first line). In the next step S07 after the movement, the laser light source 101 is turned ON; and in the next step S08, the scanning is performed for one line. Then, in the next step S09, the laser light source 101 is turned OFF; the radiation position of the excitation light is reversed to be moved; and the scanning is continued sequentially to the next line, and is continued to the final line that is the n-th line.

In the next step S10, if the radiation position of the excitation light reaches the point 306 (Sx + m - 1, Sy + n - 1) that is the scan end position (YES in step S10), the laser light source 101 is turned OFF, in the next step S11; the radiation position of the excitation light is moved to the standby position 107; and in the next step S12 after the movement, the laser light source 101 is turned ON and is caused to stand by until the output value becomes stable. In the next step S13, if there is no range to scan and the scanning is completed, the experiment ends (YES in step S13). If there is still remaining a range to scan (NO in step S13), the processing returns to step S04 and is performed again.

According to the microscope 200 in the first embodiment, the standby position 107 is provided for the excitation light to stand by; the laser light source 101 is turned ON to the standby position 107 and is caused to stand by until the output value stabilizes; and the radiation to the sample 106 is started in a state in which the output value is caused to be stable. This can resolve the problem that the luminance of the acquired image is changed unexpectedly and the quantitative analysis or the like cannot be performed; and stabilize the luminance of the acquired image.

According to the microscope 200 in the first embodiment, the laser light source 101 is turned OFF, while the excitation light is moved from the standby position 107 to the scan start position 301, while the excitation light is reversed from the point 302 to the point 303, or the like, and while the excitation light is moved from the scan end position 306 to the standby position 107. This makes it possible to reduce the phototoxicity and the damage to the sample 106 due to the radiation of excitation light.

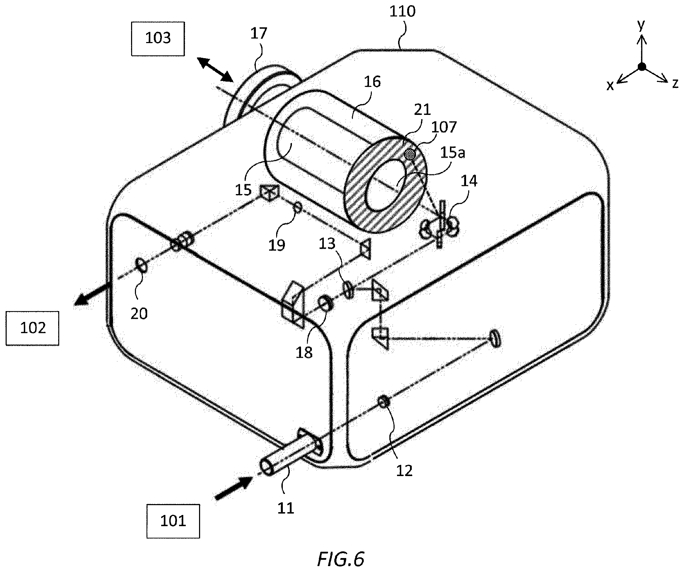

Fig. 6 shows a schematic configuration of the scan head 110 in the second embodiment. In Fig. 6, the same reference signs and numerals are used for the same components as those in the scan head 100 in the first embodiment shown in Fig. 2, and the descriptions thereof are omitted. As shown in Fig. 6, the scan head 110 in the second embodiment is provided with light blocking means 21 at the standby position 107 for causing the excitation light to stand by. By providing the light blocking means 21 at the standby position 107, a generation of secondary light by a reflection of the excitation light at the standby position, which can occur when the light blocking means 21 is not provided, is suppressed. This makes it possible to prevent stray light based on the secondary light from being radiated to the sample 106 through the microscope port 17.

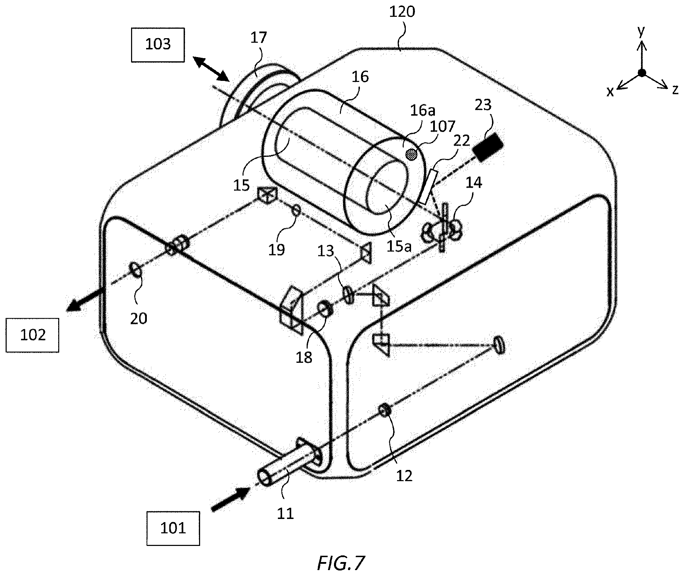

Fig. 7 shows a schematic configuration of a scan head 120 in the third embodiment. In Fig. 7, the same reference signs and numerals are used for the same components as those in the scan head 100 in the first embodiment shown in Fig. 2, and the descriptions thereof are omitted. As shown in Fig. 7, in the scan head 120 in the third embodiment, in order to address the issue of the stray light, a reflective member 22 is provided partway in the path where the excitation light is directed toward the standby position 107, instead of the standby position 107 for causing the excitation light to stand by; and at a destination toward which the excitation light reflected by the reflective member 22 is directed, a beam dump 23 which absorbs the excitation light is provided.

The reflective member 22 has a function of causing the excitation light that is directed toward the standby position 107, to be away from the excitation light that is directed toward the incident surface 15a and that is a main light beam. The beam dump 23 has the function of further absorbing, by mechanical or optical means, at least a part of the excitation light caused to be away from the main light beam by the reflective member 22. By providing the reflective member 22 in the path to the standby position 107 to be combined with the beam dump 23, the generation of the secondary light is suppressed, and it is possible to prevent the stray light from being radiated to the sample 106 through the microscope port 17.

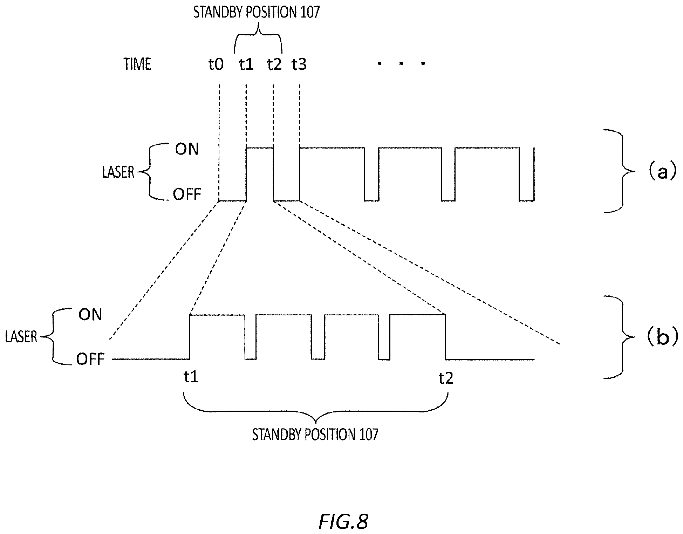

Fig. 8 shows other examples of the ON and OFF control of the laser light source 101. Fig. 8(a) depicts a part of the timing chart shown in Fig. 4. In Fig. 4, while the excitation light is caused to stand by at the standby position 107, the laser light source 101 is controlled to turned OFF at time t0, and the laser light source 101 is controlled to be turned ON from time t1 to time t2; and the laser light source 101 is controlled to be turned OFF first at time t2, and then is controlled to be turned ON again at time t3 .... As shown in Fig. 8(a), overall, the laser light source 101 is controlled to be turned ON and turned OFF at a time ratio of approximately 3:1 to 4:1.

In addition, in the embodiment shown in Fig. 4, the control is performed such that the laser light source 101 is controlled to be always ON while the excitation light is caused to stand by at the standby position 107. However, while the excitation light is caused to stand by at the standby position 107, the laser light source 101 may be controlled to be turned ON and turned OFF, as shown in Fig. 8(b). Fig. 8(b) shows another control example, and depicts a detail from time t1 to time t2 when the excitation light is caused to stand by at the standby position 107.

As shown in Fig. 8(b), in another control example, during the second state in which the excitation light is caused to stand by at the standby position 107, rather than the control of always turning ON, a control of alternately turning ON and turning OFF the laser light source 101 is performed in a repeated manner at timing similar to that in Fig. 8(a). As shown in Fig. 8(b), the time ratio at which the laser light source 101 is controlled to be turned ON and turned OFF is approximately 3:1 to 4:1, similarly to that in Fig. 8(a). That is, the control in Fig. 8(b) is similar to the control in Fig. 8(a). By controlling the laser light source 101 to be turned ON and turned OFF as shown in Fig. 8(b) while the laser light source 101 is caused to stand by for the standby position 107, and by causing the ON and OFF control and the output timing to be similar while the scanning is actually performed, thereby causing the output state to be similar, it is possible to further stabilize the output value of the laser light source 101.

In the embodiment described above, the galvanometer mirror 14 is used as the optical path change member. However, instead of the galvanometer mirror 14, as the optical path change member, a DMD (Digital Mirror Device), MEMS (Micro Electro Mechanical Systems) shutter, a SLM (Spatial Light Modulator), or the like may also be used.

In the embodiment described above, the laser light source 101 is controlled to be turned OFF to reduce the phototoxicity and the damage to the sample 106, while the excitation light is moved from the standby position 107 to the scan start position 301, while the excitation light is reversed from the point 302 to the point 303, or the like, and while the excitation light is moved from the scan end position 306 to the standby position 107. However, instead of this, a control may be performed to temporarily block the laser light source 101 by using a mechanical shutter using a motor or the like. In this case, the scanning may be performed in consideration of an opening and closing speed of the mechanical shutter.

In the embodiment described above, by switching between the first optical path in which the excitation light passes through the scanning optical system 15 arranged on a downstream side of the optical path of the galvanometer mirror 14, and the second optical path in which the excitation light does not pass through the scanning optical system 15, the switch is performed between the first state and the second state; however, a mirror may be arranged and the mirror may be controlled between the scanning optical system 15 and the objective optical system 105 such that the switching is performed between the optical path in which the excitation light passes through the objective optical system 105, and the optical path in which the excitation light does not pass through the objective optical system 105. Specifically, the standby position 107 only needs to be set outside the objective optical system 105 (similarly to the side surface 16a of the lens barrel 16, a side surface of the lens barrel of the second objective lens 105b), that is, at a position where the excitation light is not incident on the objective optical system 105. Instead of the laser light source 101, a superluminiscent diode (SLD) that is directly controlled by the control unit 104 to be able to be switched between ON and OFF, may be used. In that case, in order to generate the excitation light of a desired wavelength, a filter through which only light that is emitted from the SLD and that has a predetermined wavelength passes, may be arranged. It should be noted that the laser light source 101 and the SLD are the light sources which emit the coherent light.

In addition, various embodiments of the present invention may be described with reference to flowcharts and block diagrams, wherein the block may serve as (1) a stage in a process in which an operation is performed, or (2) a section of an apparatus having a role of performing an operation. Certain stages and sections may be implemented by a dedicated circuit, a programmable circuit supplied together with computer-readable instructions stored on computer-readable media, and/or processors supplied together with computer-readable instructions stored on computer-readable media. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer-readable medium may include any tangible device that can store instructions to be executed by a suitable device, and as a result, the computer-readable medium having instructions stored thereon includes a product including instructions that can be executed in order to create means for executing operations specified in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include floppy (registered trademark) disks, diskettes, hard disks, random access memories (RAM), read-only memories (ROM), erasable programmable read-only memories (EPROM or flash memory), electrically erasable programmable read-only memories (EEPROM), static random access memories (SRAM), compact disk read-only memories (CD-ROM), digital versatile discs (DVD), Blu-ray (registered trademark) discs, memory sticks, integrated circuit cards, and the like.

The computer-readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as Smalltalk (registered trademark), JAVA (registered trademark), C++, or the like, and a conventional procedural programming language such as a "C" programming language or a similar programming language.

Computer-readable instructions may be provided to a processor of a general-purpose computer, special purpose computer, or other programmable data processing devices, or to programmable circuitry, locally or via a local area network (LAN), wide area network (WAN) such as the Internet, or the like, so that the computer-readable instructions are executed to create means for performing operations specified in the flowcharts or block diagrams. Examples of the processor include a computer processor, a processing unit, a microprocessor, a digital signal processor, a controller, a microcontroller, and the like.

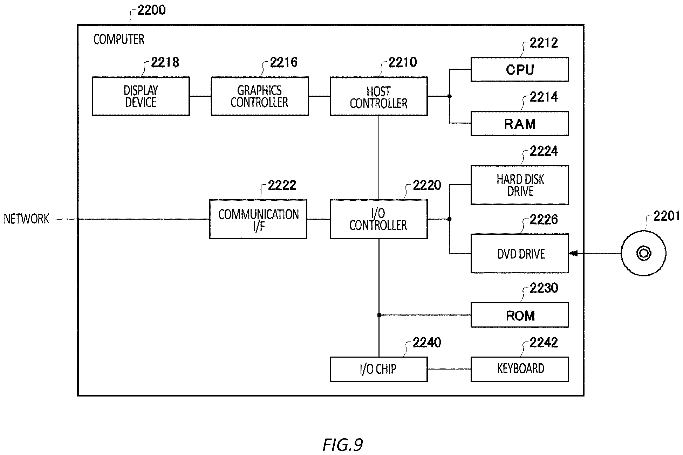

Fig. 9 shows an example of a computer 2200 in which a plurality of aspects of the present invention may be wholly or partially embodied. A program installed in the computer 2200 can cause the computer 2200 to function as an operation associated with the apparatuses according to the embodiments of the present invention or as one or more sections of the apparatuses, or can cause the operation or the one or more sections to be executed, and/or can cause the computer 2200 to execute a process according to the embodiments of the present invention or a stage of the process. Such programs may be executed by a CPU 2212 to cause the computer 2200 to perform specific operations associated with some or all of the blocks in the flowcharts and block diagrams described in the present specification.

The computer 2200 according to the present embodiment includes the CPU 2212, an RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as an ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 in a frame buffer or the like provided in the RAM 2214 or in itself, so as to cause the image data to be displayed on the display device 2218.

The communication interface 2222 communicates with other electronic devices via a network. The hard disk drive 2224 stores programs and data used by the CPU 2212 in the computer 2200. The DVD-ROM drive 2226 reads a program or data from a DVD-ROM 2201 and provides the program or data to the hard disk drive 2224 via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, or the like.

The program is provided by a computer-readable medium such as the DVD-ROM 2201 or the IC card. The program is read from a computer-readable medium, installed in the hard disk drive 2224, the RAM 2214, or the ROM 2230 which are also examples of the computer-readable medium, and executed by the CPU 2212. The information processing written in these programs is read by the computer 2200 and provides cooperation between the programs and the above-described various types of hardware resources. The apparatus or method may be constituted by implementing operations or processing of information according to use of the computer 2200.

For example, in a case where communication is performed between the computer 2200 and an external device, the CPU 2212 may execute a communication program loaded in the RAM 2214 and instruct the communication interface 2222 to perform communication processing based on a processing written in the communication program. Under the control of the CPU 2212, the communication interface 2222 reads transmission data stored in a transmission buffer processing region provided in a recording medium such as the RAM 2214, the hard disk drive 2224, the DVD-ROM 2201, or the IC card, transmits the read transmission data to the network, or writes reception data received from the network in a reception buffer processing region or the like provided on the recording medium.

In addition, the CPU 2212 may cause the RAM 2214 to read all or a necessary part of a file or database stored in an external recording medium such as the hard disk drive 2224, the DVD-ROM drive 2226 (DVD-ROM 2201), the IC card, or the like, and may execute various types of processing on data on the RAM 2214. Then, the CPU 2212 writes the processed data back in the external recording medium.

Various types of information such as various types of programs, data, tables, and databases may be stored in a recording medium and subjected to information processing. The CPU 2212 may execute, on the data read from the RAM 2214, various types of processing including various types of operations, information processing, conditional judgement, conditional branching, unconditional branching, information retrieval/replacement, or the like described throughout the present disclosure and specified by instruction sequences of the programs, and writes the results back to the RAM 2214. In addition, the CPU 2212 may retrieve information in a file, a database, or the like in the recording medium. For example, when a plurality of entries, each having an attribute value of a first attribute associated with an attribute value of a second attribute, is stored in the recording medium, the CPU 2212 may retrieve, out of the plurality of entries, an entry with the attribute value of the first attribute specified that meets a condition, read the attribute value of the second attribute stored in said entry, thereby acquiring the attribute value of the second attribute associated with the first attribute meeting a predetermined condition.

The programs or software modules described above may be stored in a computer-readable medium on the computer 2200 or near the computer 2200. In addition, a recording medium such as a hard disk or an RAM provided in a server system connected to a dedicated communication network or the Internet can be used as a computer-readable medium, thereby providing a program to the computer 2200 via the network.

While the present invention has been described by way of the embodiments, the technical scope of the present invention is not limited to the above-described embodiments. It is apparent to persons skilled in the art that various alterations and improvements can be added to the above-described embodiments. It is also apparent from the scope of the claims that the embodiments added with such alterations or improvements can be included in the technical scope of the invention.

It should be noted that the operations, procedures, steps, stages, or the like of each process performed by an apparatus, system, program, and method shown in the claims, the specification, or the drawings can be performed in any order as long as the order is not indicated by "prior to," "before," or the like and as long as the output from a previous process is not used in a later process. Even if the process flow is described using phrases such as "first" or "next" in the claims, the specification, or the drawings for the sake of convenience, it does not necessarily mean that the process must be performed in this order.

### EXPLANATION OF REFERENCES

11: input port; 12 collimating lens; 13: dichroic mirror; 14: galvanometer mirror; 15: scanning optical system; 15a: incident surface; 16a: side surface; 16: lens barrel; 17: microscope port; 18: condensing lens; 19: pinhole; 20: output port; 22: reflective member; 23: beam dump; 100: scan head; 101: laser light source; 102: light detection apparatus; 103: microscope main body; 104: control unit; 105: objective optical system; 106: sample; 107: standby position; 108: observable range; 200: microscope; 2200: computer; 2201: DVD-ROM; 2210: host controller; 2212: CPU; 2214: RAM; 2216: graphics controller; 2218: display device; 2220: input/output controller; 2222: communication interface; 2224: hard disk drive; 2226: DVD-ROM drive; 2230: ROM; 2240: input/output chip; 2242 keyboard.

## Claims

1. A microscope comprising:
a light source which is able to be directly controlled between an ON state in which coherent light is emitted and an OFF state in which the light is not emitted;
an illumination optical system which radiates the light to form an illumination region on a sample;
an optical path change member which changes an optical path of the light; and
a control unit which controls the light source and the optical path change member, wherein
the control unit controls the optical path change member, and performs a control to switch between a first state and a second state and sets the light source to be in the ON state in the second state, the first state being a state in which the light forms the illumination region on the sample when the light source is in the ON state, and does not form the illumination region when the light source is in the OFF state, and the second state being a state in which the light does not form the illumination region on the sample when the light source is either in the ON state or in the OFF state.

2. The microscope according to claim 1, wherein
the control unit controls the light source such that the ON state and the OFF state are repeated at predetermined timing, in the second state.

3. The microscope according to claim 1 or 2, wherein
the control unit controls the light source to be in the OFF state during at least one of switching from the first state to the second state, or switching from the second state to the first state.

4. The microscope according to any one of claims 1 to 3, wherein
the illumination optical system further has a condensing lens, and
in the first state, the light passes through the condensing lens, and in the second state, the light is incident on a predetermined standby position without passing through the condensing lens.

5. The microscope according to claim 4, further comprising:
a holding member which holds the condensing lens, wherein
the standby position is a part of the holding member.

6. The microscope according to claim 5, wherein
a light blocking member is provided in the part.

7. The microscope according to claim 4, further comprising:
a reflective member which is provided at the standby position, and which reflects the light; and
an absorbing member which absorbs at least a part of the light that is reflected from the reflective member.

8. The microscope according to any one of claims 1 to 7, wherein
the optical path change member is a galvanometer mirror or a spatial light modulator.

9. The microscope according to any one of claims 1 to 8, wherein
the control unit performs a control to set the light source to be in the ON state, in the second state, and switch the light to be in the first state after a standby for a predetermined time.

10. The microscope according to claim 9, wherein
the predetermined time is a time for an output value from the light source to become stable.

11. A method of controlling a microscope which includes:
a light source which is able to be directly controlled between an ON state in which coherent light is emitted and an OFF state in which the light is not emitted;
an illumination optical system which radiates the light to form an illumination region on a sample; an optical path change member which changes an optical path of the light; and
a control unit which controls the light source and the optical path change member, the method of controlling the microscope comprising:
controlling the optical path change member, and performing a control to switch between a first state and a second state and sets the light source to be in the ON state in the second state, the first state being a state in which the light forms the illumination region on the sample when the light source is in the ON state, and does not form the illumination region when the light source is in the OFF state, the second state being a state in which the light does not form the illumination region on the sample when the light source is either in the ON state or in the OFF state.
